# EUROPEAN PATENT APPLICATION

(11) **EP 2 988 523 A1**
(43) Date of publication of application: **24.02.2016**
(21) Application number: 14785756.9
(22) Date of filing: 17.04.2014
(51) Int. Cl.: H04N 21/45, H04N 21/478, G06Q 30/02

(54) **SYSTEM FOR PROVIDING USER-CUSTOMIZED ADVERTISEMENT ON BASIS OF SOUND SIGNAL OUTPUTTED FROM TV, METHOD FOR PROVIDING USER-CUSTOMIZED ADVERTISEMENT, AND COMPUTER-READABLE RECORDING MEDIUM FOR RECORDING MIM SERVICE PROGRAM**

(30) Priority: 19.04.2013 KR 20130043862
(71) Applicant: Soundlly Inc., Incheon 403-805 (KR)
(72) Inventor: KIM, Tae Hyun, Seoul 140-863 (KR)
(74) Representative: Grünecker Patent- und Rechtsanwälte PartG mbB
(86) International application number: PCT/KR2014/003351
(87) International publication number: WO 2014/171759

(57) **Abstract**

A method for providing a user-customized advertisement to a user who watches in front of a TV includes: recognizing, by a terminal of the user, a program ID included in audio signals outputted from the TV; selecting a customized advertisement for the user based on the program ID, user information, and/or an ID of a set-top box which is connected with the TV and outputs an image and a voice; and informing, by the terminal of the user, the user of the selected advertisement.

## Description

### [Technical Field]

The present invention relates to a system for providing a user-customized advertisement based on audio signals outputted from a TV, a method for providing a user-customized advertisement, and a computer-readable recording medium recorded with a Mobile Instant Messenger (MIM) service program.

### [Background Art]

Related-art methods for providing a user-customized advertisement are widely known. For example, customized advertisements are provided to users in various methods as disclosed in Korean Patent Publication No. 2012-0010098 (02 February 2012) (titled "a system for providing a user-customized advertisement service, and an operation method thereof"), and Korean Patent Publication No. 2010-0094154 (26 August 2010) (titled "a system for providing a user-customized IPTV advertisement, and a method for providing an advertisement").

### [Disclosure]

### [Technical Problem]

One or more aspects of the exemplary embodiments provide a system and a method for providing a user-customized advertisement, which can recognize a user watching a TV and user's colleagues watching the TV and provide a customized advertisement, and a computer-readable recording medium recorded with an MIM service program.

One or more aspects of the exemplary embodiments also provide a system and a method for providing a user-customized advertisement, which can maximize advertising effect by providing information on a broadcast program that a user currently watches on a screen provided by an MIM service application, and a computer-readable recording medium recorded with an MIM service program.

One or more aspects of the exemplary embodiments also provide a system and a method for providing a user-customized advertisement, which can recognize a viewer and provide a user-customized advertisement without replacing existing broadcast transmission-related equipments, and a computer-readable recording medium recorded with an MIM service program.

### [Technical Solution]

According to an aspect of an exemplary embodiment, there is provided a method for providing a user-customized advertisement to a user who watches in front of a TV, the method including: recognizing, by a terminal of the user, a program ID included in audio signals outputted from the TV; selecting a customized advertisement for the user based on the program ID, user information, and/or an ID of a set-top box which is connected with the TV and outputs an image and a voice (hereinafter, referred to as a set-top box ID); and informing, by the terminal of the user, the user of the selected advertisement.

According to an aspect of another exemplary embodiment, there is provided a method for providing a user-customized advertisement to a user who watches in front of a TV, the method including: receiving, from a terminal of the user, a program ID included in audio signals outputted from the TV to an outside, user information, and/or an ID of a set-top box which is connected with the TV and outputs an image and a voice (hereinafter, referred to as a set-top box ID); selecting a user-customized advertisement for the user who watches in front of the TV based on the program ID, the user information, and/or the set-top box ID; and transmitting the selected advertisement to the user terminal and/or the TV.

According to an aspect of another exemplary embodiment, there is provided a computer-readable recording medium which records a program for executing the method for providing the user-customized advertisement described above in a computer.

According to an aspect of another exemplary embodiment, there is provided a computer-readable recording medium which records an MIM service program for executing a method in a computer, the method including: recognizing a program ID included in audio signals outputted from a TV; selecting a customized advertisement for a user who watches the TV based on the program ID, user information, and/or an ID of a set-top box which is connected with the TV and outputs an image and a voice (hereinafter, referred to as a set-top box ID); and informing the user of the selected advertisement.

According to an aspect of another exemplary embodiment, there is provided a server in a user-customized advertisement providing system including the server and a terminal,
the server including a computer-readable recording medium which records an MIM service program,
wherein the MIM service program is a program
for allowing the terminal to execute steps:
when the terminal recognizes a program ID included in audio signals outputted from a TV, transmitting the program ID, user information, and/or an ID of a set-top box (hereinafter, referred to as a set-top box ID) which is connected with the TV and outputs an image and a voice to an external device; receiving, from the external device or another device communicably connected with the external device, an advertisement which is selected based on the program ID, the user information, and/or the set-top box ID; and informing the user that the advertisement is received.

### [Advantageous Effects]

According to one or more exemplary embodiments, since a user watching a TV is recognized, an effective user-customized advertisement can be provided.

According to one or more exemplary embodiments, since a user watching a TV and user's colleagues are recognized, a user-customized advertisement can be provided more effectively.

According to one or more exemplary embodiments, since a user watching a TV and user's colleagues around the user are recognized and an advertisement suitable for them is provided through a terminal or a TV broadcast, a more effective user-customized advertisement can be provided.

According to one or more exemplary embodiments, since not only information indicating that a user and user's colleagues watched a specific TV program, but also information on in which region they watched the TV and where they watched the TV can be collected, a more effective user-customized advertisement can be provided.

According to one or more exemplary embodiments, when one of the users using an MIM service watches a TV, information on the broadcast program (e.g., information on characters or information on products used in the program) that the user is currently watching is provided on a screen provided by the MIM application, so that advertising effect can be maximized.

According to one or more exemplary embodiments, a program ID is inserted into a sound wave and identified, so that a user-customized advertisement can be provided by a small amount of data.

### [Description of Drawings]

FIG. 1 is a view to illustrate a system for providing a user-customized advertisement according to an exemplary embodiment of the present invention;
FIG. 2 is a view to illustrate a system for providing a user-customized advertisement according to another exemplary embodiment of the present invention;
FIG. 3 is a view to illustrate a system for providing a user-customized advertisement according to another exemplary embodiment of the present invention;
FIG. 8 is a view to illustrate an operation of a terminal according to an exemplary embodiment of the present invention;

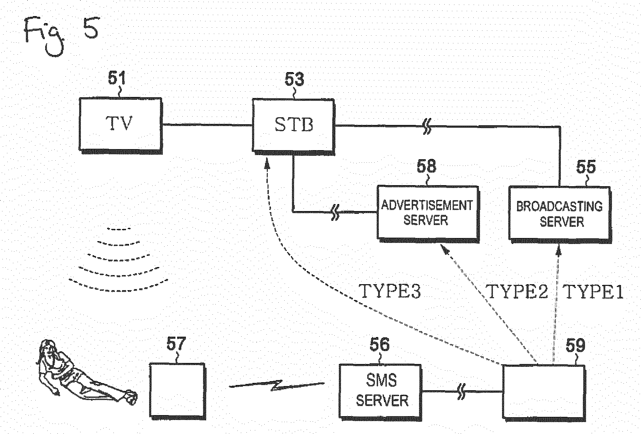

FIG. 5 is a view to illustrate a method for providing a user-customized advertisement according to an exemplary embodiment of the present invention;

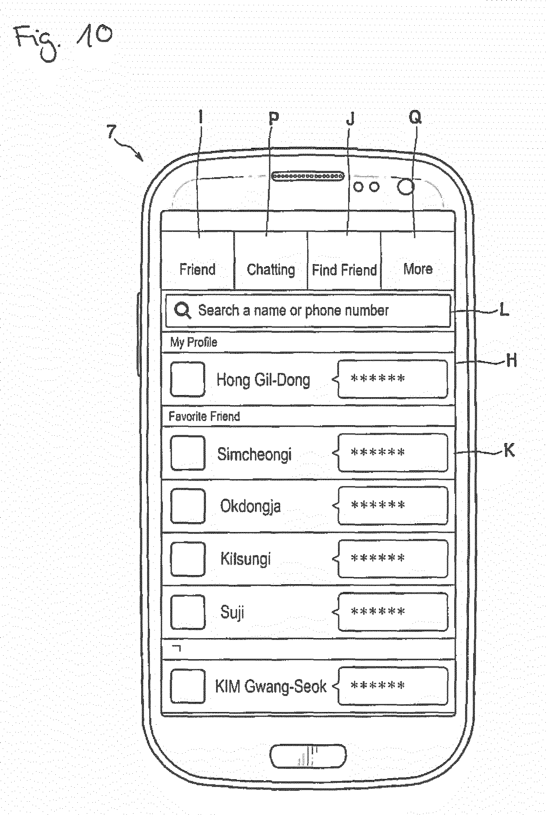

FIGs. 10 to 13 are views to illustrate an MIM service program according to an exemplary embodiment of the present invention; and

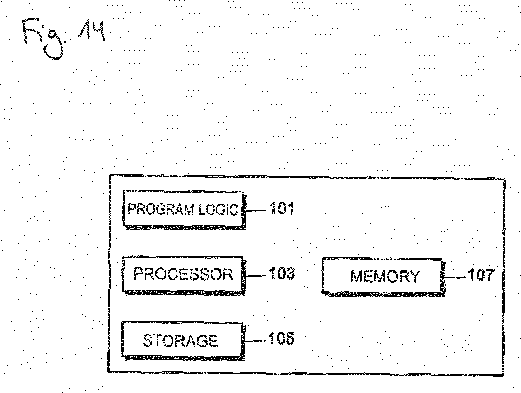

FIG. 14 is a view to illustrate a configuration of a computer according to an exemplary embodiment of the present invention;
[Description of Reference Numerals]
1, 11, 3 1: TV
3, 13, 33: Set-top box
5, 15, 35: Broadcasting server
7, 17, 37: Terminal
18, 38: Advertisement server
9, 19, 39: User-customized advertisement providing server

### [Best Mode]

Exemplary embodiments will now be described more fully with reference to the accompanying drawings to clarify aspects, features and advantages of the inventive concept. The exemplary embodiments may, however, be embodied in many different forms and should not be construed as limited to the exemplary embodiments set forth herein. Rather, the exemplary embodiments are provided so that this disclosure will be thorough and complete, and will fully convey the scope of the application to those of ordinary skill in the art.

It will be understood that, when an element is referred to as being "on" another element, the element can be directly on another element or intervening elements. In the drawings, the thickness of elements is exaggerated for easy understanding of technical features.

If the terms such as "first" and "second" are used to describe elements, these elements should not be limited by such terms. These terms are used for the purpose of distinguishing one element from another element only. The exemplary embodiments include their complementary embodiments.

The terms used in this specification are just to explain the exemplary embodiments and should not be interpreted as limiting the present invention. As used herein, the singular forms "a", "an" and "the" are intended to include the plural forms as well, unless the context clearly indicates otherwise. It will be further understood that the terms "comprises" and/or "comprising," when used in this specification, do not preclude the presence or addition of one or more other components.

Hereinafter, exemplary embodiments will be described in greater detail with reference to the accompanying drawings. The matters defined in the description, such as detailed construction and elements, are provided to assist in a comprehensive understanding of the exemplary embodiments. However, it is apparent that the exemplary embodiments can be carried out by those of ordinary skill in the art without those specifically defined matters. In the description of the exemplary embodiment, certain detailed explanations of related art are omitted when it is deemed that they may unnecessarily obscure the essence of the inventive concept.

According to one or more exemplary embodiments of the present invention, a device for selecting a user-customized advertisement may be any one of a set-top box (hereinafter, referred to as an STB), a broadcasting server, or an advertisement server. These devices may select a user-customized advertisement using one of the methods described hereinbelow.

The first method is selecting a user-customized advertisement using user information.

The user information may include information on personal details such as user's age, sex, job, etc.

The user information may include additional information on a user, such as user's TV watching pattern, chatting contents (for example, keyword information) when an MIM service is used, the number of friends chatting via the MIM service, and characteristics of friends (such as age, family, school alumni, etc.). In the exemplary embodiments of the present invention, the user information implies both "user information" and "additional information on a user," but the "user information" and the "additional information on a user" may be distinguished when necessary.

In addition, the user information may further include information on the other users (or information on the other terminals) who watch a TV with the user in the same location as the user.

The second method is selecting a user-customized advertisement using a program ID.

For example, at least one of the products (a handbag, a car, a hat, shoes, etc.) indirectly advertised in a program or services may be selected as a user-customized advertisement.

The third method is selecting a user-customized advertisement using an STB ID.

Since the STB ID informs the location of a user, an advertisement may be selected considering the location of the user.

For example, a user-customized advertisement may be selected according to a place where the STB is installed (e.g., a public place, a house, an office, etc.). When the STB ID indicates that the STB is installed in a public place, an advertisement suitable for people of all ages may be selected and an advertisement for certain products, which only used by women and thus may embarrass viewers, may not be selected.

In another example, since the STB ID may indicate that users who have received the same STB ID are in the same place, an advertisement selected considering all of the viewers may be provided.

The fourth method is selecting a user-customized advertisement in a certain combination of the above-described three methods. For example, the method may use i) the user information and the program ID, ii) the user information and the STB ID, iii) the program ID and the STB ID, or iv) the user information, the program ID, and the STB ID.

In the exemplary embodiments described hereinbelow, when a certain device is mentioned as selecting a user-customized advertisement, the device may select the user-customized advertisement using at least one of the above-described methods even if there is no mention about a user-customized advertisement selecting method.

In addition, according to one or more exemplary embodiments of the present invention, a device for inserting a program ID into a broadcast signal may be any one of the STB or the broadcasting server. In the exemplary embodiments described hereinbelow, when a program ID is mentioned as being included in a broadcast signal, it should be understood that the program ID is inserted by the STB or broadcasting server even if there is no specific mention about how the program ID is inserted.

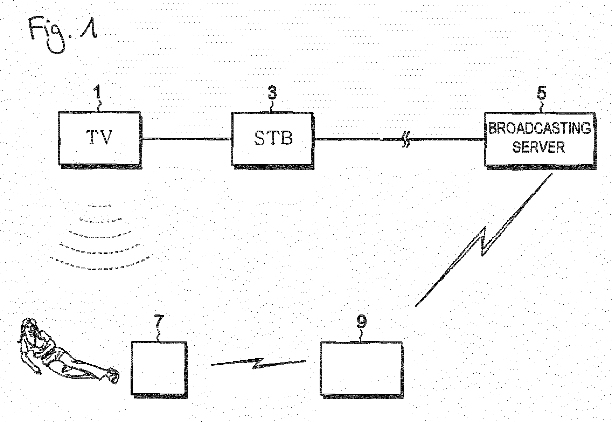

FIG. 1 is a view to illustrate a system for providing a user-customized advertisement according to an exemplary embodiment of the present invention.

Referring to FIG. 1, the system for providing the user-customized advertisement according to an exemplary embodiment of the present invention may include a TV 1 which outputs an image and a sound; an STB 3 which receives broadcast signals from a broadcasting server 5, converts a program of a channel selected by a user from among the received broadcast signals into video and audio signals, and then outputs the signals to the TV 1; the broadcasting server 5 which is a device for transmitting broadcast signals to the STB 3; a terminal 7; and a user-customized advertisement providing server 9.

The TV 1 may receive video and audio signals from the STB 3 and may output these signals in such a form (for example, a sound and an image) that the user can recognize.

The STB 3 may be divided into two types of STBs: a TV internal type and a TV external type. In the exemplary embodiment of FIG. 1, the TV external type is illustrated. However, the STB 3 is not limited to the TV external type and the STB 3 may be implemented by using a TV internal type. The same is applied to the other exemplary embodiments.

The STB 3 according to an exemplary embodiment of the present invention may receive broadcast signals from the broadcasting server 5 through a terrestrial base station, a satellite, a cable, etc.

In addition, according to another exemplary embodiment of the present invention, the STB 3 may support bi-directional communication using an Internet Protocol (IP), and may receive the broadcast signals from the broadcasting server 5 through the Internet, demodulates the broadcast signals of the channel selected by the user in the received broadcast signals into video and audio signals, and output the video and audio signals to the TV.

The STB 3 may be allocated an identifier (hereinafter, an STB ID) to be distinguished from the other STBs. The STB ID may be an IP address and/or a MAC address, but a person skilled in the art should know that the STB ID is not limited to these.

The broadcasting server 5 broadcasts the broadcast signals.

The terminal 7 is a mobile communication device which is owned by the user who watches the TV 1, and may recognize the audio signals outputted from the TV 1 and extract a program ID when the program ID is included in the recognized audio signals.

According to an exemplary embodiment, the terminal 7 may provide the program ID extracted from the audio signals outputted from the TV 1 and the user information of the terminal 7 to the user-customized advertisement providing server 9. As will be explained below, the terminal 7 may extract the STB ID as well as the program ID when the audio signals outputted from the TV 1 include the STB ID and the program ID.

The STB ID is information necessary for providing the user watching the TV 1 with a user-customized advertisement, and furthermore may indicate the location of the user of the terminal 7.

According to an exemplary embodiment of the present invention, a method of inserting the program ID and the STB ID into the audio signals, and a method of extracting the program ID and the STB ID from the audio signals may use the techniques disclosed in Korean Patent Application No. 10-2012-0038120 (titled "a method and a system for estimating a location of a mobile terminal using a sound system, and a sound system used in the same) filed on April 12, 2012 with the KIPO by the inventor of the present application.

In another example, the techniques disclosed in Korean Patent Application No. 10-2012-0078410 (titled "a method and a system for collecting proximity data") filed on July 18, 2012 with the KIPO by the inventor of the present application (the feature of including an ID in audio signals and recognizing and extracting the ID included in the audio signals) may be used.

In another example, the techniques disclosed in Korean Patent Application No. 10-2012-0053286 (titled "a system for identifying a speaker and a location estimation system using the same") filed on May 18, 2012 with the KIPO by the inventor of the present application (the feature of including an ID in audio signals and recognizing and extracting the ID included in the audio signals) may be used.

In another example, the techniques disclosed in Korean Patent Application No. 10-2012-0078446 (titled "a method and an apparatus for calculating intimacy between users using proximity information") filed on July 18, 2012 with the KIPO by the inventor of the present application (the feature of including an ID in audio signals and recognizing and extracting the ID included in the audio signals) may be used.

All of the techniques disclosed in the above-mentioned patent applications are incorporated into the specification of the present application and should be regarded as a part of the specification of the present application.

According to the present exemplary embodiment, the user-customized advertisement providing server 9 may transmit the program ID and the user information to the broadcasting server 5, and the broadcasting server 5 may select an advertisement based on the program ID, the user information, and/or the STB ID, and provide the selected advertisement to the user-customized advertisement providing server 9 and/or the set-top box 3. Herein, the advertisement transmitted to the user-customized advertisement providing server 9 by the broadcasting server 5 and the advertisement transmitted to the set-top box 3 may not necessarily be the same, and may be different.

According to the present exemplary embodiment, the terminal 7 may receive the advertisement from the user-customized advertisement providing server 9, and the "advertisement" recited herein may include an "advertisement" and/or an "address for accessing an advertisement (for example, a link)."

In this specification, an "advertisement" may include an "advertisement" and/or an "address for accessing an advertisement." However, the "advertisement" and the "address for accessing the advertisement" may be distinguished from each other when necessary.

The terminal 7 may output the advertisement received from the user-customized advertisement providing server 9 through a display (not shown) and a speaker (not shown) provided in the terminal 7.

The terminal 7 may be a mobile device which can communicate such as a cellular phone, a smartphone, a tablet PC, a PDA, a tablet computer, a wearable computer, etc.

According to the present exemplary embodiment, an MIM service program according to an exemplary embodiment of the present invention may be installed in a computer-readable recording medium (not shown) (for example, a Hard Disk Drive (HDD), a Solid State Drive (SSD), or a memory) that the terminal 7 has. The MIM service program may extract the program ID from the audio signals outputted from the TV 1, and provide the extracted program ID and the user information to the user-customized advertisement providing server 9.

The MIM service program stored in the computer-readable recording medium (not shown) provided in the terminal 7 may be an MIM service program according to an exemplary embodiment, which will be described below, and may be a program which is transmitted from an external device, for example, the user-customized advertisement providing server 9.

According to the present exemplary embodiment, the MIM service program may be a program for executing a method, which includes the steps of: recognizing, by the terminal 7, a program ID included in audio signals outputted from the TV 1; transmitting the program ID, user information, and/or the STB ID of the STB 3 to the user-customized advertisement providing server 9; receiving, from the user-customized advertisement providing server 9 or the broadcasting server 5 communicably connected with the user-customized advertisement providing server 9, an advertisement which is selected based on the program ID, the user information, and/or the set-top box ID; and informing the user that the advertisement is received. The MIM service program will be explained in detail below with reference to FIGs. 10 to 13.

The user-customized advertisement providing server 9 may include a computer-readable recording medium (not shown), and the computer-readable recording medium (not shown) may store an MIM service program according to an exemplary embodiment of the present disclosure. The user-customized advertisement providing server 9 may transmit the MIM service program to the terminal 7 in response to a request from the terminal 7. Thereafter, the MIM service program transmitted to the terminal 7 may be installed in the terminal 7 in an executable form.

The "computer-readable recording medium" recited in the specification of the present application may be installed in any of the terminal, the user-customized advertisement providing server, the broadcasting server, or the STB. The "computer-readable recording medium" may store the MIM service program according to an exemplary embodiment of the present invention. The user-customized advertisement providing server according to the present exemplary embodiment may additionally serve as a message server for transmitting an SMS message or an MIM message.

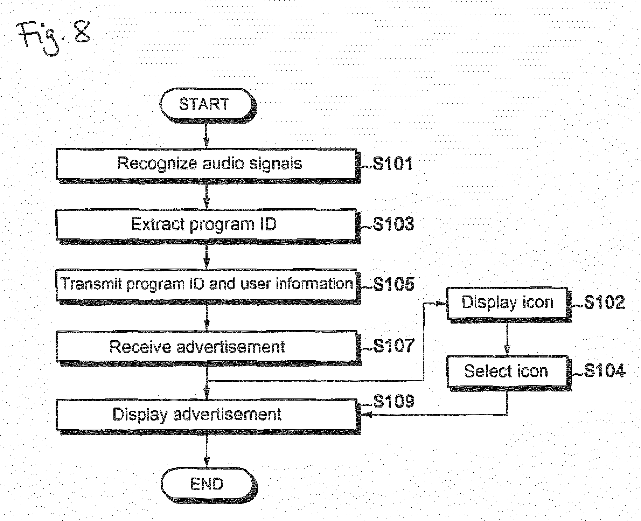

Hereinafter, an operation of a terminal according to an exemplary embodiment of the present invention will be explained in detail with reference to FIG. 8.

FIG. 8 is a view to illustrate an operation of a terminal according to an exemplary embodiment of the present invention.

Referring to FIG. 8, the terminal may recognize audio signals outputted from the TV (S101), and may extract a program ID from the recognized audio signals if any (S103). Herein, when an STB ID is included in the audio signals, the terminal may extract the STB ID.

The terminal may be provided with a microphone (not shown) to perform operations S101 and S103.Prior to performing operation S101, the microphone (not shown) should be in such a state (referred to as an "ON state") that the microphone can recognize the audio signals outputted from the TV 1.

The microphone may be in the ON state when the terminal is initially driven, a predetermined program (for example, the MIM service program explained in this specification) installed in the terminal is driven, or when a command is received from the user of the terminal.

A method for recognizing the ID included in the audio signals can be implemented from the features disclosed in the above-mentioned Korean patent applications, which were filed by the inventor of the present application, and thus, the operation of extracting the program ID (S103) will not be described in detail in the following descriptions.

According to the present exemplary embodiment, the terminal may transmit the program ID extracted in operation S103 and user information to the broadcasting server. As will be explained below, the terminal may be changed to transmit the program ID and the user information to other devices than the broadcasting server. For example, the terminal may be configured to transmit the program ID and the user information to the STB or the advertisement server.

According to the exemplary embodiment, the terminal may transmit both the STB ID and the program ID to the broadcasting server when the STB ID is extracted along with the program ID in operation S103. In this case, the terminal may be configured to transmit the STB ID to other devices (for example, the STB or the advertisement server) than the broadcasting server.

According to the present exemplary embodiment, the terminal may directly receive the STB ID from the STB through WiFi or Bluetooth.

According to an exemplary embodiment, the user terminal may collect a WiFi MAC address or a Bluetooth MAC address mounted in the STB, and may use the MAC addresses as the STB ID. When the terminal collects the STB ID as described above, the terminal may transmit the program ID, the user information, and the STB ID to the broadcasting server. When the STB or the advertisement server is a device for selecting the user-customized advertisement, the STB ID, the program ID, and the user information may be transmitted to the STB or the advertisement server.

According to the present exemplary embodiment, the terminal may receive an advertisement from the broadcasting server (S107), and display the advertisement (S109). In this case, the terminal may be changed to receive the advertisement from other devices (for example, the STB or the advertisement server) than the broadcasting server. Herein, the advertisement may be selected based on the program ID, the user information, and/or the STB ID.

According to the present exemplary embodiment, the terminal may inform the user that the advertisement is received. For example, when the terminal receives the advertisement, the terminal may display an icon indicating that the advertisement is received (S102). The icon may be displayed on a screen which is provided by a program (for example, a program for providing an MIM service) executed on a memory (not shown) provided in the terminal.

In addition, according to the present exemplary embodiment, when the terminal receives the advertisement, the terminal may add an 'advertisement name' indicating the received advertisement, a 'company name' related to the advertisement, or a 'program name' related to the advertisement (hereinafter, referred to as an "advertisement name") to a "plus friend list," or, when the terminal extracts the program ID or extracts the program ID and the user information, the terminal may add the advertisement name to the "plus friend list", thereby informing the user that the advertisement is received.

In the present specification, the "plus friend list" refers to a list of advertisements which are recommended to the user. When the user selects an advertisement name from the "plus friend list," the MIM service program may add the advertisement name selected by the user to a "recommended friend list." The "plus friend list" and the "recommended friend list" will be explained in detail below with reference to FIGs. 10 to 13.

Alternatively, the terminal according to the present exemplary embodiment may add the advertisement name to the "plus friend list" and simultaneously may display the icon.

According to the present exemplary embodiment, when the user selects the icon displayed in step S102, the terminal may display the advertisement received in operation S107 as a voice and/or an image (S104). Alternatively, when the user selects an advertisement name registered at the "plus friend list," the terminal may display an advertisement corresponding to the selected advertisement name.

In the exemplary embodiment of FIG. 8, the step of displaying the icon or registering at the "plus friend list" is performed at the same time as or after the step of receiving the advertisement. However, alternatively, the step of displaying the icon or registering at the "plus friend list" may be performed at the same time as or after step S103 or S105.

According to the present exemplary embodiment, operations S103 to S109 described above may be performed by the MIM service program stored in the terminal.

Hereinafter, the MIM service program will be explained in detail with reference to FIGs. 1, 10, 11, 12, and 13.

FIGs. 10 to 13 are views to illustrate an MIM service program according to an exemplary embodiment of the present invention.

According to an exemplary embodiment of the present invention, the MIM service program is a kind of application having a function for allowing members belonging to the same group to exchange texts, and the representative examples of the MIM service program may be applications having trademarks (or service marks) such as Kakao Talk, Tictoc, LINE, Olleh talk, My People, etc.

According to an exemplary embodiment of the present invention, the MIM service program may be installed in a terminal having a configuration illustrated in FIG. 14 and operated.

According to an exemplary embodiment of the present invention, the MIM service program may include a text exchanging function and may further include other functions closely connected therewith.

FIG. 10 is a view showing a user interface screen which is provided by the MIM service program according to an exemplary embodiment of the present invention.

Referring to FIG. 10, the user interface screen H provided by the MIM service program according to an exemplary embodiment of the present invention may include selection bars I, P, J, and Q, a search window L, a profile window, and a friend list window K indicating a list of friends.

The selection bars may include a friend menu I, a chatting menu P, a find friend menu J, and a more menu Q.

The friend list window K displays a list of IDs (or names) of friends registered as friends of the user of the terminal.

The search window L is a window through which the user enters a search term, and, when the user touches the search window L, a keyboard for entering a text, etc. may be displayed on the user interface window H.

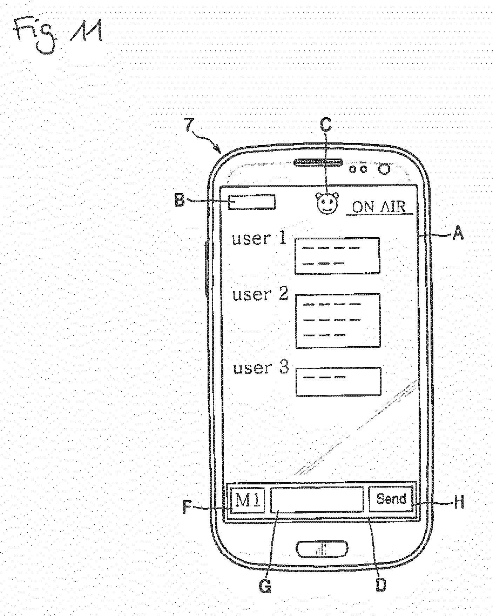

When the user selects the chatting menu P in FIG. 10, a user interface screen may be displayed as shown in FIG. 11, for example.

Referring to FIG. 11, the user interface screen displayed on the terminal may include a chat window A on which a text and/or multimedia data exchanged between friends belonging to the same group are displayed, a window B displaying information on the friends belonging to the same group (for example, the number of members belonging to the same group), an icon C, and a user command input window D for receiving an input of a user command.

The MIM service program according to an exemplary embodiment of the present invention may display the icon C on an upper portion which is formed on the outer area of the chat window A as shown in FIG. 11. Alternatively, the MIM service program may display the icon C within the chat window A.

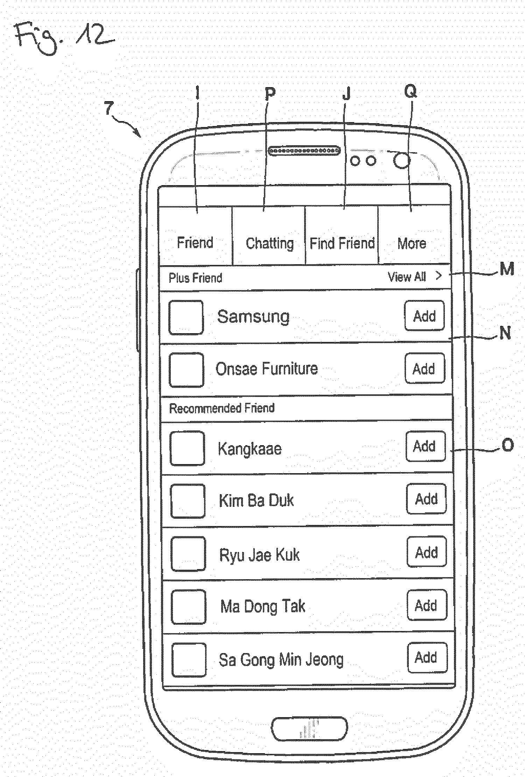

The MIM service program according to an exemplary embodiment of the present invention may display the icon C when the terminal receives an advertisement, or may display the icon C when the terminal extracts a program ID or extracts a program ID and user information. The MIM service program according to the present exemplary embodiment of the present invention may add an advertisement name to a "plus friend list" when the terminal receives an advertisement. This will be explained below with reference to FIG. 12.

In the present specification, the displaying the icon means activating the icon. When the icon is activated, the icon may be displayed in a form to be recognized by the user. For example, the icon image may disappear and appear, or may have its brightness changed from a dark state to a bright state. When the user selects the icon, the MIM service program may display an advertisement linked to the icon selected by the user.

The user command input window D for receiving an input of a user command may include a menu selection button ("M1") F indicating a menu which can be selected by the user, a text input window G, and a send command button H.

When the user selects the icon C, the MIM service program may display an advertisement linked to the icon C. For example, when the icon C is selected, the MIM service program may call an application program for displaying an advertisement and transmit an address where an advertisement is stored to the application program. The application program may read out the advertisement stored in the address (this address may indicate a certain location of a storage included in the terminal or a certain location of a storage of a certain server to which the terminal 7 is communicably connected), and display the advertisement. For example, when the advertisement is a moving image, the application program may be a program for reproducing the moving image.

FIG. 12 is a view showing an example of a user interface screen which is provided by an MIM service program according to an exemplary embodiment of the present invention.

When the user selects the "find friend" menu on the screen shown in FIG. 10, the MIM service program may display a user interface screen as shown in FIG. 12.

Referring to FIG. 12, the user interface screen includes selection bars (for example, a "friend" menu, a "chatting" menu, a "find friend" menu, and a "more" menu), a plus friend list window N indicating advertisement names, and a recommended friend list window O indicating names of persons recommended as friends.

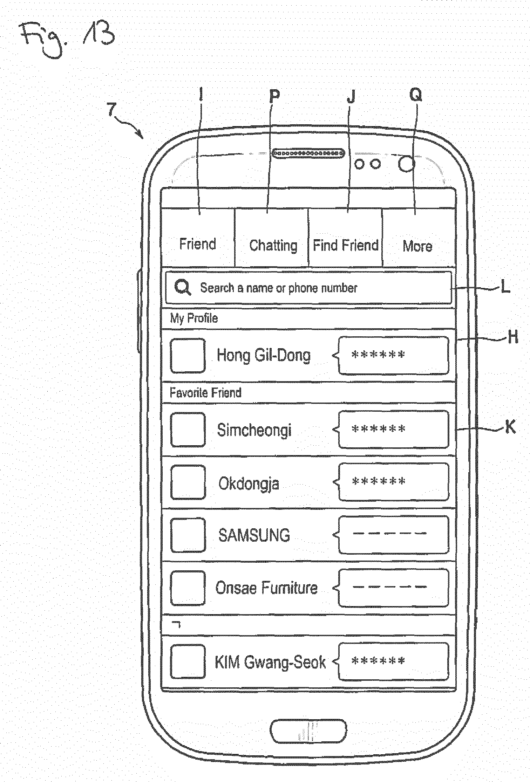

When one of the advertisement names displayed on the plus friend list window N is added (the "add" button is selected), the selected advertisement name is added as "friend." For example, when the 'Onsae Furniture' is added, the Onsae Furniture is added to the friend list K as shown in FIG. 13.

According to an exemplary embodiment of the present invention, when the terminal receives an advertisement, the MIM service program adds an advertisement name indicating the received advertisement to the "plus friend list" on the plus friend list window N.

The friend list and the plus friend list may be stored in the terminal or the MIM service server.

According to an exemplary embodiment of the present invention, the MIM service program may change the state of the microphone (not shown) of the terminal into the ON state when the MIM service program is initially executed or there is a user command. The microphone which is turned on can recognize audio signals existing outside the terminal, and may transmit the result of the recognizing to the MIM service program.

The MIM service program may determine whether a program ID exists in the recognized audio signals, and, when a program ID exists in the audio signals, may extract the program ID and transmit the same to the user-customized advertisement providing server along with user information. When an STB ID is included in the audio signals, the STB ID may be transmitted to the user-customized advertisement providing server along with the program ID.

Thereafter, when an advertisement is received from the user-customized advertisement providing server or another device, the terminal may display the advertisement through its own display (not shown).

According to an exemplary embodiment of the present invention, the MIM service program may transmit the program ID and the user information of the terminal to the user-customized advertisement providing server, for example.

The MIM service program may have an option of transmitting the STB ID to the user-customized advertisement providing server along with the user information. Herein, the STB ID may be included in the audio signals outputted from the TV or may be directly received from the STB.

The MIM service program may have another option of, when a pre-defined keyword is included in text messages (including data exchanged as a voice or an image) exchanged between friends, extracting the keyword, and transmitting information on the frequency or type of the keyword (hereinafter, referred to as "keyword information") to the user-customized advertisement providing server. For example, when the word "refrigerator" is pre-registered as a keyword, and the word "refrigerator" appears in a text exchanged between friends belonging to the same group three times, keyword information indicating that the word "refrigerator" appears three times may be included in the user information. A single keyword or a plurality of keywords may be provided. For example, the keyword may be stored in the terminal, and the MIM service program may find how many times such a keyword is mentioned in the text message and may include the keyword information in the user information.

Alternatively, the MIM service program may transmit the user information and the program ID to at least one of the set-top box, the advertisement server, or the broadcasting server, and may receive an advertisement from where the user information and the program ID are transmitted, and display the advertisement.

All of the codes of the MIM service program operated as described above may be installed in the terminal, or some of the codes of the MIM service program may be installed in the terminal and the other codes may be installed in a server (for example, a cloud server or a user-customized advertisement providing server) connected to the terminal in a wire and/or wireless manner, and executed.

In addition, the code of the MIM service program may be stored in a computer-readable recording medium provided in the user-customized advertisement providing server, the advertisement server, the broadcasting server, or etc., and may be transmitted to the terminal when there is a request from the terminal.

Embodiments with reference to FIGs. 10 and 11 were described above as the embodiments are applied to an MIM service program that is commercialized and implemented in the name of Kakao Talk at the present time. However, this is merely an example, and an MIM service program according to the present invention may be applied to other kinds of MIM service programs.

Referring back to FIG. 1, when the user-customized advertisement providing server 9 receives the user information and the program ID from the terminal 7, the user-customized advertisement providing server 9 may provide the user information and the program ID to the broadcasting server 5. The information that the user-customized advertisement providing server 9 transmits to the broadcast server 5 may not necessarily be the user information and the program ID which are received from the terminal 7, and the user-customized advertisement providing server 9 may transmit information equivalent to the user information and the program ID. For example, the user information that the server 9 receives from the terminal 7 may be a user ID, and the user information that the server 9 transmits to the broadcasting server 5 may be information on user's age or sex. The program ID may be any information which can identify a program. For example, a program may be specified by channel information and a broadcasting time. Therefore, the information described above may be information equivalent to the program ID.

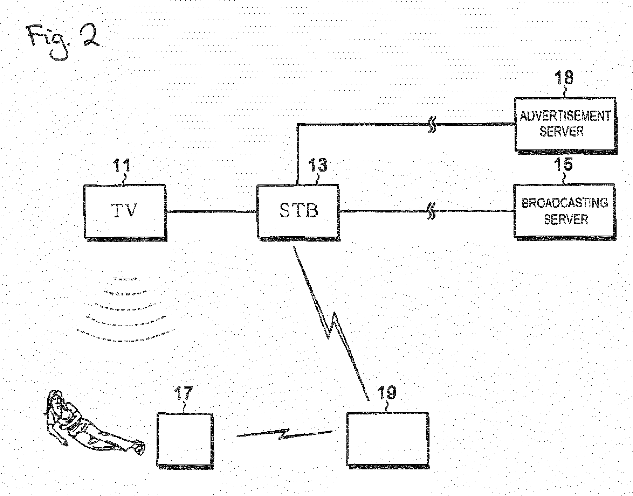

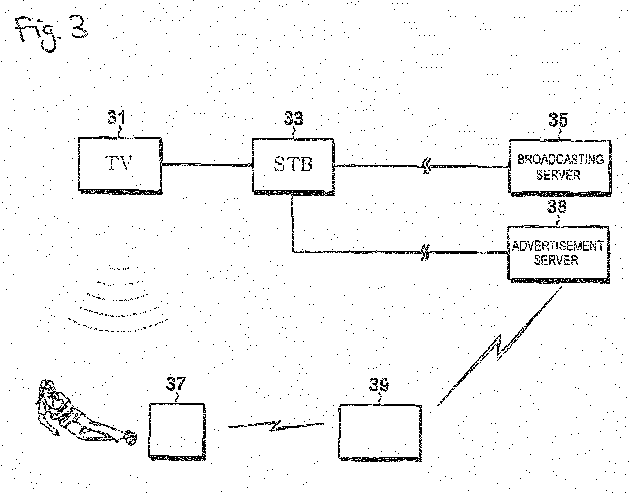

The user-customized advertisement providing server 9 may function as a server for providing an MIM service. In addition, the user-customized advertisement providing servers 19, 39 which will be described below in FIGs. 2 and 3 may be configured to additionally function as an MIM server.

The broadcasting server 5 may select a customized advertisement based on the user information, the program ID, and/or the STB ID, configure a user-customized broadcast by inserting the customized advertisement into a broadcast program, and transmit the user-customized broadcast to the STB 3. The STB 3 may provide the user-customized broadcast to the TV 1.

According to an exemplary embodiment, the inserting the customized advertisement into the broadcast program may include inserting a customized advertisement into a certain area of a broadcast program in the form of a subtitle or an image, or inserting a customized advertisement between broadcast programs instead of an existing advertisement.

In the present specification, the "broadcast program" may refer to all of the broadcasts before the advertisement selected based on the user information, the program ID, and/or the STB ID is inserted, and accordingly, the "broadcast program" may not include an advertisement or may already include other advertisements (advertisements other than the advertisement selected based on the user information, the program ID, and/or the STB ID).

When selecting an advertisement based on the user information, the broadcasting server 5 may consider additional information on the user, such as a user's TV watching pattern, chatting contents on the MIM service, the number of friends on the MIM, and characteristics of friends (age, family, school alumni, etc.), and keyword information. In the present specification, the "user information" may be used as a concept including additional information on the user and keyword information as well as information on the user (user's age, etc.).

The broadcasting server 5 may select the advertisement according to user's age or sex with reference to the user information, and may configure a user-customized broadcast by inserting the selected advertisement between the broadcast programs or into the broadcast program (for example, inserting the advertisement in the form of a subtitle on the bottom of a TV screen), and transmit the user-customized broadcast to the STB 3.

In another example, the server 5 may select an advertisement on products which are used in a program designated by the program ID or products which are used by characters appearing in the program (for example, indirect advertisement products) with reference to the program ID, and insert the selected advertisement into an original broadcast program, and transmit the broadcast program to the STB 3.

In another example, the broadcast server 5 may select an advertisement using i) the program ID and/ the user information and ii) the STB ID. Herein, the STB ID may be used for the broadcasting server 5 to determine the location of the user. For example, the broadcasting server 5 may determine the location of the user based on the STB ID, and select an advertisement according to whether the user is located in a public place, house, or office.

In another example, when the users have the same STB ID, the broadcasting server 5 may determine that the users are in the same location and may select an advertisement common to the users which are in the same location. Alternatively, the broadcasting server 5 may select an advertisement which is suitable for a person who can have great advertising effect from among persons in the same location with reference to the user information (for example, user's sex, age, etc.).

As described above, it can be known what kind of people are watching the TV I and where people are watching the TV using the STB ID, and the STB ID is useful for selecting a customized advertisement.

In the exemplary embodiment of FIG. 1, in order to transmit the user-customized broadcast to the STB 3, the broadcasting server 5 should know an ID assigned to the STB 3.

The broadcasting server 5 may know the STB ID in the following methods:
The first method is that the STB 3 transmits its own STB ID to the broadcasting server 5.

The second method is that the user-customized advertisement providing server 9 transmits the STB ID to the broadcasting server 5.

According to the second method, when the user-customized advertisement providing server 9 transmits the user information and the program ID to the broadcasting server 5, the user-customized advertisement providing server 9 transmits the STB ID of the STB 5 too. The user information and the program ID and the STB ID of the STB 5 may not necessarily be transmitted to the broadcasting server 5 at the same time, and may be transmitted at different times.

The user-customized advertisement providing server 9 may receive the STB ID of the STB 5 from the user terminal 7 in advance and pre-store the STB ID, or may receive the STB ID of the STB 5 every time the user information and the program ID are received from the user terminal 7.

The user terminal 7 may directly receive the STB ID from the STB 5 wirelessly, for example, through WiFi or Bluetooth. Alternatively, the user terminal 7 may collect the WiFi MAC address or Bluetooth MAC address mounted in the STB 5, and may use the address as the STB ID. Alternatively, the user terminal 7 may acquire the STB ID from the audio signals outputted from the TV 1. In this case, the audio signals outputted from the TV 1 may include the STB ID as well as the program ID. For example, the STB 3 or the broadcasting server 5 may be a device for inserting the STB ID into the audio signals to be outputted from the TV 1.

FIG. 2 is a view to illustrate a user-customized advertisement providing system according to another exemplary embodiment of the present invention.

Referring to FIG. 2, the user-customized advertisement providing system may include a TV 11 which outputs video and audio signals, an STB 13 which outputs a program of a channel selected by a user to the TV 11 as video and audio signals, a broadcasting server 15 which transmits broadcast signals to the STB 13, a terminal 17, an advertisement server 18, and a user-customized advertisement providing server 19.

Compared with the exemplary embodiment of FIG. 1, the exemplary embodiment of FIG. 2 differs therefrom in the following points: the first difference is that the user-customized advertisement providing server 19 transmits user information and a program ID received from the terminal 17 to the STB 13 rather than the broadcasting server 15, and the second difference is that the STB 13 receives advertisements from the advertisement server 18, selects an advertisement from the received advertisements based on the user information and the program ID received from the terminal 17, configures a user-customized broadcast by inserting the selected advertisement into a broadcast program, and then outputs the broadcast through the TV 11.

According to the exemplary embodiment of FIG. 2, the STB 13 may receive a predetermined amount of advertisements from the advertisement server 18, which stores and manages advertisements, in advance, and store the advertisements. The STB 13 may select an advertisement from the stored advertisements based on the user information and the program ID, and configure a user-customized broadcast by inserting the selected advertisement into an original broadcast program.

In another example, since the STB 13 knows its location, the STB 13 may select an advertisement according to whether the user is located in a public place, a house, or an office.

In another example, when users have the same STB ID, the STB 13 may determine that the users are in the same location and select an advertisement common to the persons who are watching in the same location. Alternatively, the STB 13 may select an advertisement suitable to a person who feels great advertising effect from among the persons in the same location with reference to user's information (for example, user's sex, age, etc.).

According to an alternative embodiment of FIG. 2, the STB 13 may transmit the user information, the program ID, and/or the STB ID to the advertisement server 18, which stores and manages advertisements, and the advertisement server 18 may select an advertisement from the advertisements stored therein based on the user information, the program ID, and/or the STB ID received from the STB 13, and then transmit the selected advertisement to the STB 13. The STB 13 may configure a user-customized broadcast by inserting the advertisement received from the advertisement server 18 into the broadcast programs received from the broadcasting server 15, and provide the broadcast to the TV 11.

The functions of the terminal 17 and the user-customized advertisement providing server 19 are the same as or similar to the functions of the terminal 7 and the user-customized advertisement providing server 9 in the exemplary embodiment of FIG. 1, except for that the terminal 17 transmits the user information and the program ID to the STB 13 rather than the broadcasting server 15.

A computer-readable recording medium (not shown) provided in the terminal 17 may store an MIM service program, and the MIM service program may be transmitted from the user-customized advertisement providing server 19, for example.

The MIM service program according to the present exemplary embodiment may be a program for executing a method including the steps of: recognizing, by the terminal 17, a program ID included in audio signals outputted from the TV 11; transmitting the program ID, user information, and/or the STB ID of the STB 13 to the user-customized advertisement providing server 19; receiving, from the user-customized advertisement providing server 19 or the STB 13 communicably connected with the user-customized advertisement providing server 19, an advertisement which is selected based on the program ID, the user information, and/or the STB ID; and informing the user that the advertisement is received. The MIM service program has been described above in detail with reference to FIGs. 10 to 13.

The user-customized advertisement providing server 9 of FIG. 2 may additionally function as an MIM server to provide an MIM service.

In the exemplary embodiment of FIG. 2, in order to transmit the user information and the program ID to the STB 13, the user-customized advertisement providing server 19 should know the ID of the STB 13.

For example, the user-customized advertisement providing server 9 may receive the STB ID of the STB 5 from the user terminal 7 in advance and store the STB ID, or may receive the STB ID of the STB 5 every time that the user information and the program ID are received from the user terminal 7.

In the exemplary embodiment of FIG. 2 described above, the user information which is used in selecting the advertisement may further include additional information on the user in addition to the user's information (age, hobby, etc.).

In another alternative embodiment of FIG. 2, the advertisement server 18 may be omitted. In this case, the broadcasting server 15 may transmit advertisements to the STB 13, and the STB 13 may select a user-customized advertisement from the advertisements received from the broadcasting server 15 using the user information, the program ID, and the STB ID received from the user-customized advertisement providing server 19, insert the advertisement to the broadcast program, and output the broadcast program to the TV 11.

FIG. 3 is a view to illustrate a user-customized advertisement providing system according to another exemplary embodiment of the present invention.

Referring to FIG. 3, the user-customized advertisement providing system may include a TV 31, an STB 33, a broadcasting server 35, a terminal 37, an advertisement server 38, and a user-customized advertisement providing server 39.

Compared with the exemplary embodiment of FIG. 2, the exemplary embodiment of FIG. 3 differs therefrom in the following points: the first difference is that the user-customized advertisement providing server 39 transmits user information, a program ID, and/or an STB ID received from the terminal 37 to the advertisement server 38 rather than the STB 13, and the second difference is that the advertisement server 38 selects an advertisement from the advertisements stored therein based on the user information, the program ID, and/or the STB ID received from the user-customized advertisement providing server 39, and transmits the selected advertisement to the STB 33, and the STB 33 configures a user-customized broadcast by inserting the advertisement received from the advertisement server 38 into a broadcast program received from the broadcasting server 35, and then transmits the broadcast to the TV 31.

The functions of the terminal 37 and the user-customized advertisement providing server 39 are the same as or similar to the functions of the terminal 17 and the user-customized advertisement providing server 19 in the exemplary embodiment of FIG. 2, except for that the terminal 37 transmits the user information and the program ID to the advertisement server 38 rather than the STB 33.

Similarly to the terminal 17, the terminal 37 may extract the STB ID when audio signals outputted from the TV 31 include the STB ID. The terminal 37 may transmit the extracted STB ID to the advertisement server 33 along with the user information and the program ID. The advertisement server 33 may select a user-customized advertisement using the user information, the program ID, and/or the STB ID, and then transmit the user-customized advertisement to the STB 33 having the same STB ID as received from the terminal 17.

An MIM service program stored in a computer-readable recording medium (not shown) provided in the terminal 37 may be the MIM service program according to an exemplary embodiment of the present invention, or may be transmitted from an external device, for example, the user-customized advertisement providing server 39.

The MIM service program according to the present exemplary embodiment may be a program for executing a method including the steps of: recognizing, by the terminal 37, a program ID included in audio signals outputted from the TV 31; transmitting the program ID, user information, and/or the STB ID of the STB 33 to the advertisement server 38; receiving, from the advertisement server 38, an advertisement which is selected based on the program ID, the user information, and/or the STB ID; and informing the user that the advertisement is received. The MIM service program has been described above in detail with reference to FIGs. 10 to 13.

In order to transmit the user information and the program ID to the advertisement server 33, the user-customized advertisement providing server 19 should know the address of the advertisement server 33. A manager may store the address of the advertisement server 33 in the user-customized advertisement providing server 39. Alternatively, the address of the advertisement server 33 may be included in the audio signals outputted from the TV 31, and the terminal 37 may recognize the address of the advertisement server 33 and provide the address to the user-customized advertisement providing server 19. In this exemplary embodiment, the STB 33 may include the address of the advertisement server 33 in the audio signals to be outputted to the TV 31.

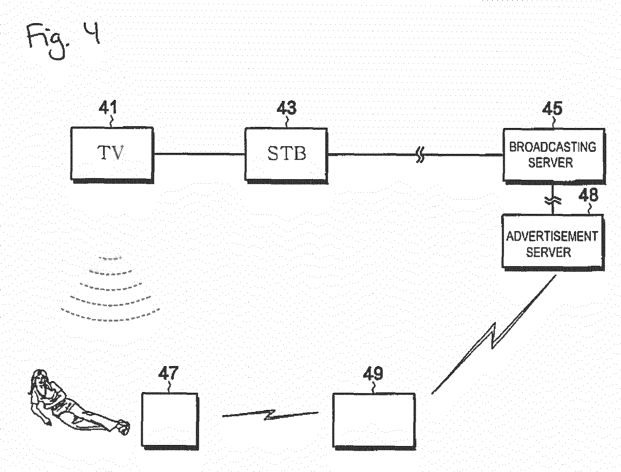

FIG. 4 is a view to illustrate a user-customized advertisement providing system according to another exemplary embodiment of the present invention.

Referring to FIG. 4, the user-customized advertisement providing system may include a TV 41, an STB 43, a broadcasting server 45, a terminal 47, an advertisement server 48, and a user-customized advertisement providing server 49.

The exemplary embodiment of FIG. 4 is the same as or similar to the above-described exemplary embodiments in that the terminal 47 extracts a program ID from audio signals outputted from the TV 41 (extract an STB ID if any), and provides the program ID to the user-customized advertisement providing server 49 along with user information.

An MIM service program stored in a computer-readable recording medium (not shown) provided in the terminal 47 may be the MIM service program according to an exemplary embodiment of the present invention, or may be transmitted from an external device, for example, the user-customized advertisement providing server 49.

The MIM service program according to the present exemplary embodiment may be a program for executing a method including the steps of: recognizing, by the terminal 47, a program ID included in audio signals outputted from the TV 41; transmitting the program ID, user information, and/or the STB ID of the STB 43 to the user-customized advertisement providing server 49; receiving, from the user-customized advertisement providing server 49 or the advertisement server 48 communicably connected with the user-customized advertisement providing server 49, an advertisement which is selected based on the program ID, the user information, and/or the STB ID; and informing the user that the advertisement is received. The MIM service program has been described above in detail with reference to FIGs. 10 to 13.

The user-customized advertisement providing server 49 may transmit the user information and the program ID (and the STB ID, if any) to the advertisement server 48, and the advertisement server 48 may select a user-customized advertisement based on the user information, the program ID, and/or the STB ID, and then transmit the user-customized advertisement to the broadcasting server 45.

The broadcasting server 45 may insert the user-customized advertisement received from the advertisement server 48 into a broadcast program, and transmit the broadcast program to the STB 43.

FIG. 5 is a view to illustrate a user-customized advertisement providing system according to another exemplary embodiment of the present invention.

Referring to FIG. 5, the user-customized advertisement providing system may include a TV 51, an STB 53, a broadcasting server 55, an MIM server 56, a terminal 57, an advertisement server 58, and a user-customized advertisement providing server 59.

Compared with the exemplary embodiments of FIGs. 1 to 4 described above, the embodiment of FIG. 5 differs therefrom in that the MIM server 56 is further included.

The embodiment of FIG. 5 differs from the above-described exemplary embodiments in that the terminal 57 extracts a program ID (and an STB ID, if any) from audio signals outputted from the TV 51, and transmits the program ID (and the STB ID) to the MIM server 56 along with user information, and the MIM server 56 transmits them to the user-customized advertisement providing server 59.

An MIM service program stored in a computer-readable recording medium (not shown) provided in the terminal 57 may be the MIM service program according to an exemplary embodiment of the present invention, or may be transmitted from an external device, for example, the MIM server 56.

The MIM service program according to the present exemplary embodiment may be a program for executing a method including the steps of: recognizing, by the terminal 57, a program ID included in audio signals outputted from the TV 51; transmitting the program ID, user information, and/or the STB ID of the STB 53 to the MIM server 56; receiving, from the MIM server 56 or the STB 53 communicably connected with the MIM server 56, the broadcasting server 56, or the advertisement server 58, an advertisement which is selected based on the program ID, the user information, and/or the STB ID; and informing the user that the advertisement is received. The MIM service program has been described above in detail with reference to FIGs. 10 to 13.

The MIM server 56 may provide the program ID and the user information to the user-customized advertisement providing server 59, and the user-customized advertisement providing server 59 may transmit the user information and the program ID (and the STB ID, if any) to the broadcasting server 55 (TYPE 1), to the advertisement server 58 (TYPE 2), or to the STB 53 (TYPE 3). That is, the embodiment of FIG. 5 may be implemented in any of the above-mentioned three types.

When the embodiment is implemented in the TYPE 1, a user-customized advertisement may be selected in a similar method to that of the embodiment of FIG. 1 described above. That is, the broadcasting server 55 selects a user-customized advertisement using the user information, the program ID, and/or the STB ID, and transmits the user-customized advertisement to the STB 53.

When the embodiment is implemented in the TYPE 2, a user-customized advertisement may be selected in a similar method to that of the embodiment of FIG. 3 described above. That is, the advertisement server 58 selects a user-customized advertisement using the user information, the program ID, and/or the STB ID, and transmits the user-customized advertisement to the STB 53.

When the embodiment is implemented in the TYPE 3, a user-customized advertisement may be selected in a similar method to that of the embodiment of FIG. 2 described above. That is, the STB 13 selects a user-customized advertisement.

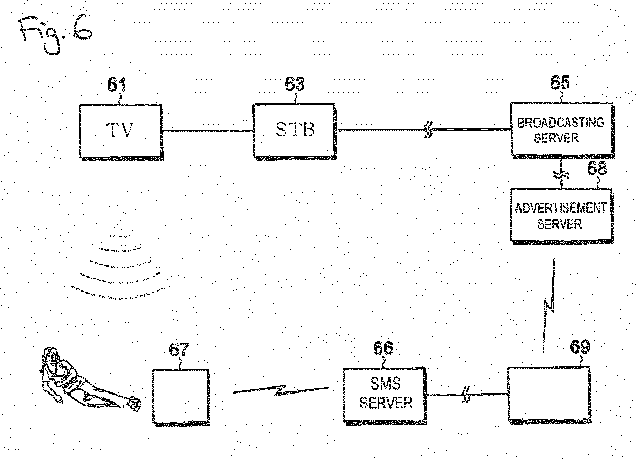

FIG. 6 is a view to illustrate a user-customized advertisement providing system according to another exemplary embodiment of the present invention.

Referring to FIG. 6, the user-customized advertisement providing system may include a TV 61, an STB 63, a broadcasting server 65, an MIM server 66, a terminal 67, an advertisement server 68, and a user-customized advertisement providing server 69.

An MIM service program stored in a computer-readable recording medium (not shown) provided in the terminal 67 may be the MIM service program according to an exemplary embodiment of the present invention, or may be transmitted from an external device, for example, the MIM server 66.

The MIM service program according to the present exemplary embodiment may be a program for executing a method including the steps of: recognizing, by the terminal 67, a program ID included in audio signals outputted from the TV 61; transmitting the program ID, user information, and/or the STB ID of the STB 63 to the MIM server 66; receiving, from the MIM server 66 or the advertisement server 68 communicably connected with the MIM server 66, an advertisement which is selected based on the program ID, the user information, and/or the STB ID; and informing the user that the advertisement is received. The MIM service program has been described above in detail with reference to FIGs. 10 to 13.

Compared with the exemplary embodiment of FIG. 5, the embodiment of FIG. 6 differs therefrom only in that the user-customized advertisement providing server 59 transmits the user information and the program ID (the STB ID if any) to the advertisement server 68, and the advertisement server 68 selects a user-customized advertisement using the user information, the program ID, and/or the STB ID, and transmits the user-customized advertisement to the broadcasting server 65. The subsequent operations are the same as or similar to those of the embodiment of FIG. 4, and thus a detailed description thereof is omitted.

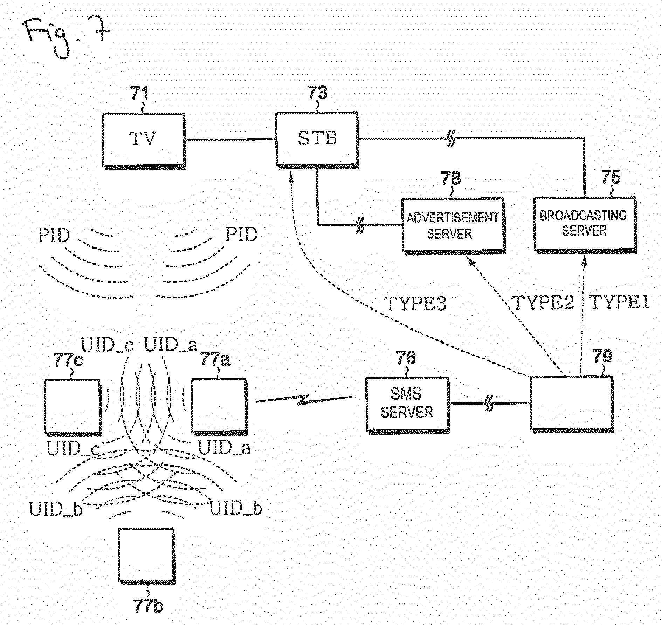

FIG. 7 is a view to illustrate a user-customized advertisement providing system according to another exemplary embodiment of the present invention.

Referring to FIG. 7, the user-customized advertisement providing system may include a TV 71, an STB 73, a broadcasting server 75, an MIM server 76, terminals 77, an advertisement server 78, and a user-customized advertisement providing server 79.

The present exemplary embodiment is a variation of the embodiment of FIG. 5, and differences from the embodiment of FIG. 5 will be explained.

In the exemplary embodiment of FIG. 7, the terminals 77a, 77b, and 77c may output their respective IDs UID_a, UID_b, and UID_c through a speaker as audio signals. In addition, the terminals 77a, 77b, and 77c may recognize UIDs included in audio signals outputted from other terminals, and extract the UIDs.

For example, the terminal 77a may output its own ID (UID_a) through the speaker as audio signals, and the audio signals may be recognized by the other terminals 77b and 77c.

The terminal 77a may extract IDs included in the audio signals outputted from the other terminals 77b and 77c.

The terminal 77a may transmit, to the MIM server 76, a program ID extracted from the audio signals outputted from the TV 71, the IDs of the terminals located in the same place as the terminal 77a (for example, UID_b and UID_c), and the user information of the terminal 77a. The other terminals 77b and 77c may perform the same or similar operation as or to that of the terminal 77a.

The MIM server 76 may provide the program ID, the user information, and the IDs of the terminals (or user information of the terminals 77b and 77c instead of the IDs of the terminals) to the user-customized advertisement providing server 79, and the user-customized advertisement providing server 79 may transmit the program ID, the user information, and the IDs of the terminals (or the user information of the terminals 77b and 77c) to the broadcasting server 75, the broadcasting server 78, or the STB 73. The broadcasting server 75, the advertisement server 78, or the STB 73 may select a user-customized advertisement with reference to the IDs of the terminals in the same place as well as the user information and the program ID.

The techniques of inserting the IDs of the terminals 77a, 77b, and 77c into the audio signals and outputting the IDs, and extracting the ID included in the audio signals outputted from the other terminals may use the methods disclosed in the patent applications filed by the inventor of the present application, as described in the explanation of the embodiment of FIG. 1.

The operations of the other elements which are not described in FIG. 7 are the same as or similar to those of the embodiment of FIG. 5, and thus a detailed description thereof is omitted.

As in the exemplary embodiment of FIG. 7, it can be known who is in the same location, and thus an advertisement suitable to all of the users can be provided.

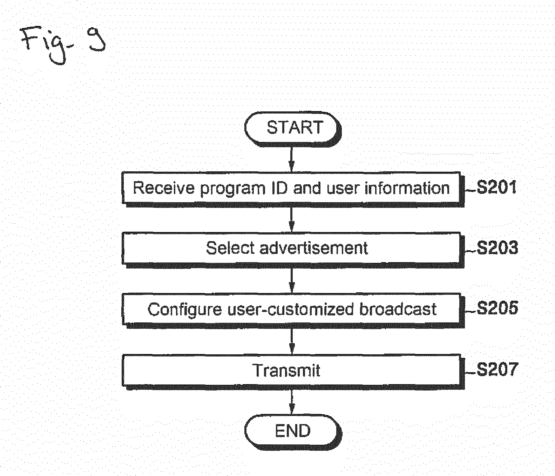

FIG. 9 is a view to illustrate a method for providing a user-customized advertisement according to an exemplary embodiment of the present invention.

Referring to FIG. 9, in the method for providing the user-customized advertisement according to an exemplary embodiment of the present invention, at least one of the STB, the advertisement server, and the broadcasting server receives a program ID and user information (S201). Herein, the user information may include additional information on the user.

Alternatively, at least one of the STB, the advertisement server, and the broadcasting server may receive an STB ID along with the program ID and the user information in step S201.

The at least one of the STB, the advertisement server, and the broadcasting server which receives the program ID and the user information in step S201 configures a user-customized broadcast by selecting an advertisement (S205). One of the STB, the advertisement server, and the broadcasting server may perform step S205 or two or more of them may be closely connected with each other to perform step S205. Alternatively, in step S205, the at least one of the STB, the advertisement serve, and the broadcasting server may configure the user-customized broadcast by selecting the advertisement using the program ID, the user information, and/or the STB ID.

The user-customized broadcast configured in step S205 is transmitted to the TV.

The method for providing the user-customized advertisement in FIG. 9 may be implemented by one of the systems described in FIGs. 1 to 7.

FIG. 14 is a view to illustrate a configuration of a computer according to an exemplary embodiment of the present invention. Referring to FIG. 14, the computer according to an exemplary embodiment of the present invention may include program logic 101, a processor 103, a storage 105, and a memory 107.

The computer of FIG. 14 may be one of a mobile device such as a smartphone or a PDA, and a computer system such as a desktop PC, a tablet PC, or a server, but is not limited to these.

In the above-described exemplary embodiments, the terminal, the advertisement server, or the user-customized advertisement providing server may be implemented in the same configuration as that of the computer of FIG. 14, and the methods or the MIM service program described in FIGs. 8 to 10 may be implemented in the configuration of the computer shown in FIG. 14.

When the terminal is implemented in the same configuration as that of the computer of FIG. 14 in the above-described exemplary embodiments, the computer of FIG. 14 may further include a display (not shown) and a speaker (not shown).

The program logic 101 may be implemented in the form of a code executable in a computer, and may be stored in the storage 105 and loaded into the memory 107 under the control of the computer processor 130 to be executed.

For example, the program logic 101 may include a code for performing the operations of the terminal, the advertisement server, or the user-customized advertisement providing server described above with reference to FIGs. 1 to 7 and FIG. 10.

In another example, the program logic 101 may include a code for performing the methods described above with reference to FIGs. 8 and 9.

In another example, the program logic 101 may include an MIM service program and a program necessary for executing the MIM service program.

In the above-described exemplary embodiments, the elements implemented as a code of a program executable in a computer may be implemented as hardware logic. When the elements are implemented as hardware logic, the elements may be embedded in the computer processor 103 or may be implemented as separate hardware from the computer processor 103.

The above-described exemplary embodiments may be changed as follows:
The server for the MIM service (hereinafter, referred to as an "MIM server") may be configured to be located between the user-customized advertisement providing server and a device for selecting an advertisement (for example, the broadcasting server, the STB, or the advertisement server).

In this case, the terminal (for example, the MIM service program installed in the terminal) may transmit the user information, the program ID, and/or the STB ID to the user-customized advertisement providing server, and the user-customized advertisement providing server may transmit the user information, the program ID, and/or the STB ID to the MIM server. The MIM server may transmit the user information, the program ID, and/or the STB ID received from the terminal to the user-customized advertisement providing server as they are, and may include a result of analyzing chatting contents on the MIM in the user information and transmit the user information to the device for selecting the advertisement (the STB, the broadcasting server, or the advertisement server).

In the above-described exemplary embodiments, the device for selecting the advertisement using the user information, the program ID, and/or the STB ID is an external device communicably connected with the terminal (or another device communicably connected with the external device), rather than the terminal. However, the device for selecting the advertisement may not necessarily be the external device and the terminal itself may select the advertisement. That is, the terminal may select an advertisement suitable for the user of the terminal using the user information, the program ID, and/or the STB ID, and may inform the user or display for the user.

While the invention has been shown and described with reference to certain preferred embodiments thereof, it will be understood by those skilled in the art that various changes in form and details may be made therein without departing from the spirit and scope of the invention as defined by the appended claims.

Therefore, the scope of the invention is defined not by the detailed description of the invention but by the appended claims, and all differences within the scope will be construed as being included in the present invention.

## Claims

1. A method for providing a user-customized advertisement to a user who watches in front of a TV, the method comprising:
recognizing, by a terminal of the user, a program ID included in audio signals outputted from the TV;
selecting a customized advertisement for the user watching the TV based on the program ID, user information, and/or an ID of a set-top box which is connected with the TV and outputs an image and a voice (hereinafter, referred to as a set-top box ID); and
outputting, by the terminal of the user or the TV, the selected advertisement to the user.

2. The method of claim 1, further comprising:
transmitting, by the terminal of the user, the program ID, the user information, and/or the ID of the set-top box which is connected with the TV and outputs the image and the voice to an external device; and
receiving, by the terminal of the user or the set-top box having the set-top box ID, a customized advertisement which is selected by the external device or another device communicably connected with the external device.

3. The method of claim 2, further comprising turning on, by the terminal of the user, a microphone of the terminal of the user to recognize the audio signals outputted from the TV.

4. The method of claim 1, wherein the user information comprises at least one of user's age, sex, and/or job; chatting information made between the user and at least one another user; a TV watching pattern of the user; and information on at least one another user who is in a same location as the user.

5. The method of claim 1, wherein the terminal of the user displays a user interface screen comprising a chat window through which the terminal transmits a text and/or multimedia data to friends belonging to a same group as the user, or receives a text and/or multimedia data from at least one of the friends,
wherein the informing the user comprises activating an icon on the user interface screen.

6. The method of claim 1, wherein the terminal of the user displays a user interface screen comprising a plus friend list window for displaying a friend recommendation list for the user, and
wherein the informing the user comprises adding an advertisement name of the selected advertisement to the plus friend list window.

7. The method of claim 2, wherein the external device is an MIM service server which transmits a text and/or multimedia data to friends belonging to a same group, and
wherein the MIM service server transmits the program ID, the user information, and/or the set-top box ID to an advertisement server, a set-top box, or a broadcasting server which are communicably connected thereto, and receives an advertisement from a device to which the program ID, the user information, and/or the set-top box ID are transmitted, and transmits the advertisement to the terminal of the user.

8. The method of claim 2, wherein the program ID included in the audio signals outputted from the TV is a program ID which is inserted into a broadcast signal by the set-top box or a device which transmits the broadcast signal to the set-top box.

9. A method for providing a user-customized advertisement to a user who watches in front of a TV, the method comprising:
receiving, from a terminal of the user, a program ID included in audio signals outputted from the TV to an outside, user information, and/or an ID of a set-top box which is connected with the TV and outputs an image and a voice (hereinafter, referred to as a set-top box ID);
selecting a user-customized advertisement for the user who watches in front of the TV based on the program ID, the user information, and/or the set-top box ID; and
transmitting the selected advertisement to the user terminal and/or the TV.

10. The method of claim 9, further comprising:
inserting the selected user-customized advertisement to a broadcast program, and
wherein the transmitting to the TV comprises transmitting the program into which the user-customized advertisement is inserted.

11. The method of claim 9, wherein the user information comprises at least one of user's age, sex, and/or job; chatting information made between the user and at least one another user; a TV watching pattern of the user; and information on at least one another user who is in a same location as the user.

12. The method of claim 11, wherein the selecting the user-customized advertisement comprises selecting the user-customized advertisement by an MIM service server which transmits a text and/or multimedia data to friends belonging to a same group, by an advertisement server which provides an advertisement to the TV, or by the set-top box.

13. The method of claim 9, wherein the selecting the user-customized advertisement comprises determining that users having the same set-top box ID are in a same location, and selecting an advertisement suitable for the users.

14. The method of claim 9, wherein the program ID included in the audio signals outputted from the TV is a program ID which is inserted into a broadcast signal by the set-top box or a device for transmitting the broadcast signal to the set-top box.

15. A computer-readable recording medium which records a program for executing the method for providing the user-customized advertisement according to any one of claims 9 to 14 in a computer.

16. A computer-readable recording medium which records an MIM service program for executing a method in a computer, the method comprising:
recognizing a program ID included in audio signals outputted from a TV;
selecting a customized advertisement for a user who watches the TV based on the program ID, user information, and/or an ID of a set-top box which is connected with the TV and outputs an image and a voice (hereinafter, referred to as a set-top box ID); and
informing the user of the selected advertisement.

17. The computer-readable recording medium of claim 16, wherein the method further comprises:
transmitting the program ID, the user information, and/or the ID of the set-top box which is connected with the TV and outputs the image and the voice to an external device; and
receiving the customized advertisement which is selected by the external device or another device communicable connected with the external device.

18. The computer-readable recording medium of claim 17, wherein the selecting the customized advertisement comprises selecting an advertisement suitable for the user watching the TV based on the program ID and the user information, and
wherein the informing the user of the selected advertisement comprises transmitting the selected advertisement to the set-top box which is connected with the TV and outputs the image and the voice, and has the set-top box ID.

19. The computer-readable recording medium of claim 17, wherein the method further comprises displaying a user interface screen comprising a chat window through which a text and/or multimedia data are transmitted to friends belonging to a same group, or a text and/or multimedia data are received from at least one of the friends, and
wherein the informing the user comprises activating an icon on the user interface screen.

20. The computer-readable recording medium of claim 17, wherein the method further comprises displaying a user interface screen comprising a plus friend list window for displaying a friend recommendation list for the user, and
wherein the informing the user comprises adding an advertisement name of the selected advertisement to the plus friend list window.

21. The computer-readable recording medium of claim 18, wherein the external device is an MIM service server which transmits a text and/or multimedia data to friends belonging to a same group.

22. A server in a user-customized advertisement providing system comprising the server and a terminal, the server comprising a computer-readable recording medium which records an MIM service program,
wherein the MIM service program is a program for executing a method comprising:
when the terminal recognizes a program ID included in audio signals outputted from a TV, transmitting the program ID, user information, and/or an ID of a set-top box (hereinafter, referred to as a set-top box ID) which is connected with the TV and outputs an image and a voice to an external device;
receiving, from the external device or another device communicably connected with the external device, an advertisement which is selected based on the program ID, the user information, and/or the set-top box ID; and
informing the user that the advertisement is received.

23. The server of claim 22, wherein the method further comprises turning on a microphone of the terminal to recognize the audio signals outputted from the TV.

24. The server of claim 22, wherein the user information comprises at least one of user's age, sex, and/or job; chatting information made between the user and at least one another user; a TV watching pattern of the user; and information on at least one another user who is in a same location as the user.

25. The server of claim 23, wherein the method further comprises displaying a user interface screen comprising a chat window through which a text and/or multimedia data are transmitted to friends belonging to a same group as the user, or a text and/or multimedia data are received from at least one of the friends,
wherein the informing the user comprises activating an icon on the user interface screen to inform that the advertisement is received.

26. The server of claim 23, wherein the method further comprises:
displaying a user interface screen comprising a plus friend list window for displaying a friend recommendation list for the user, and
wherein the informing the user comprises adding an advertisement name of the received advertisement to the plus friend list window.

27. The server of claim 22, wherein the external device is an MIM service server which provides a service of transmitting a text and/or multimedia data to the server or friends belonging to a same group, and
wherein the server or the MIM service server transmits the program ID, the user information, and/or the set-top box ID to an advertisement server, a set-top box, or a broadcasting server which are communicably connected thereto, and receives an advertisement from a device to which the program ID, the user information, and/or the set-top box ID are transmitted, and transmits the advertisement to the terminal of the user.
